Europäisches Patentamt

European Patent Office

Office européen des brevets

(19)

(11) **EP 0 897 564 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(21) Anmeldenummer: **97921727.0**

(22) Anmeldetag: **23.04.1997**

(51) Int Cl.[6]: **G06F 17/50**, G21C 17/00

(86) Internationale Anmeldenummer:
**PCT/EP97/02077**

(87) Internationale Veröffentlichungsnummer:
**WO 97/43725 (20.11.1997 Gazette 1997/50)**

(54) **VERFAHREN UND SYSTEM ZUR SIMULATION DES VERHALTENS EINER TECHNISCHEN ANLAGE**

PROCESS AND SYSTEM FOR SIMULATING THE BEHAVIOUR OF A TECHNICAL INSTALLATION

PROCEDE ET SYSTEME PERMETTANT DE SIMULER LE COMPORTEMENT D'UNE INSTALLATION TECHNIQUE

(84) Benannte Vertragsstaaten:
**BE CH DE ES FI FR GB LI NL SE**

(30) Priorität: **09.05.1996 DE 19618745**

(43) Veröffentlichungstag der Anmeldung:
**24.02.1999 Patentblatt 1999/08**

(73) Patentinhaber: **SIEMENS AKTIENGESELLSCHAFT**
**80333 München (DE)**

(72) Erfinder: **SCHNEIDER, Kurt**
**D-90547 Stein (DE)**

(56) Entgegenhaltungen:
- **RUAN ET AL: "an integral modeling technique for high-speed and detailed simulation of lwr thermal-hydraulic processes" PROCEEDINGS OF THE INTERNATIONAL TOPICAL MEETING ON NUCLEAR THERMAL HYDRAULICS, 1993, GRENOBLE FRANCE, Seiten 599-607, XP002040442**
- **CICERO ET AL: "computation of 3d thermohydraulics in partially blocked bundles during the reflood phase of a loca : thyc qualification on the feba experiments and pwr reactor core applications" PROCEEDINGS OF INTERNATIONAL CONFERENCE ON NUCLEAR SYSTEMS THERMOHYDRAULICS, 30.Mai 1994, PISA ITALY, Seiten 419-427, XP002040443**
- **SONNENBURG ET AL: "analysis of a selected two-phase flow phenomenon in vver reactors with horizontal steam generators" NUCLEAR ENGINEERING AND DESIGN, Bd. 145, 1993, NORTH-HOLLAND, Seiten 261-270, XP002040444**

## Beschreibung

Die Erfindung bezieht sich auf ein Verfahren zur Simulation des Verhaltens einer technischen Anlage, in der in einem Teilbereich ein in einer Anzahl von Phasen vorliegendes Medium umläuft. Sie bezieht sich weiter auf ein Simulationssystem zur Durchführung dieses Verfahrens.

Bei der Planung einer kerntechnischen Anlage oder für ein Genehmigungsverfahren für eine derartige Anlage ist eine möglichst genaue Kenntnis des Anlagenverhaltens auch bei Unfall- oder Störfallsituationen erforderlich. Für eine dazu notwendige Analyse des Anlagenverhaltens kann ein Simulationsverfahren unter Vorgabe wählbarer Situationen Szenarien aufzeigen. Ein solches Simulationsverfahren ist zudem bei der Anwendung in Simulatoren, mit deren Hilfe beispielsweise das Kraftwerkspersonal geschult wird, von Bedeutung.

Für die Simulation des Verhaltens des Teilbereiches "Primärkreislauf" eines Druckwasserreaktors, in dem fallweise ein in den Phasen "flüssig" und "gasförmig" vorliegendes wasser-Dampf-Gemisch als Kühlmedium umläuft, wird der Teilbereich, in dem das Medium umläuft, in eine Anzahl von Teilvolumina gegliedert. Dabei herrscht in jedem Teilvolumen für jede Phase thermisches Gleichgewicht in dem Sinne, daß keine Ortsabhängigkeit der jede Phase beschreibenden Zustandsparameter besteht. Zur Simulation wird üblicherweise für jede Phase je eine Massen- und eine Energiegleichung formuliert. Diese Gleichungen enthalten Massen- und Wärmeströme. Die Simulation der zeitlichen Entwicklung jeder Phase wird dabei für jedes Teilvolumen separat durchgeführt, wobei der konvektive Massen- und Wärmeaustausch mit benachbarten Teilvolumina über Impulsgleichungen berücksichtigt wird.

Die Massen- und Wärmeströme werden üblicherweise in einen Massen- und/oder Wärmeaustausch zwischen den Phasen (Interfacial Mass and Heat Transfer) und in einen Wärmeaustausch mit einer möglicherweise vorhandenen Wand (Wall Heat Transfer) unterteilt.

Für den Massen- und/oder Wärmeaustausch zwischen den Phasen, also (aufgrund von) Kondensation oder Verdampfung, kann ein Ansatz nach der folgenden Gleichung gemacht werden:

$$M_{fg} = - \frac{H_{if} \, (T_{sat} - T_f) + H_{ig} \, (T_{sat} - T_g)}{h_g{}^* - h_f{}^*} \qquad 1)$$

$$Q_{fg} = - \frac{H_g{}^* H_{if} \, (T_{sat} - T_f) + h_f{}^* H_{ig} \, (T_{sat} - T_g)}{h_g{}^* - h_f{}^*} \qquad 2)$$

$M_{fg}$ beschreibt dabei den Massenstrom von der flüssigen in die gasförmige Phase, wogegen $Q_{fg}$ den entsprechenden Wärmestrom repräsentiert. $T_f$ und $T_g$ sind die Temperaturen der flüssigen bzw. gasförmigen Phase, und $T_{sat}$ beschreibt eine Sättigungstemperatur. Die Konstanten $h_g{}^*$ und $h_f{}^*$ hängen bei den üblichen Verfahren von der Transferrichtung ab. Bei einer Verdampfung ist $h_g{}^*$ eine Sättigungsenthalpie des Dampfes und $h_f{}^*$ die Enthalpie der (in diesem Zustand unterkühlten) Flüssigkeit. Bei einer Kondensation dagegen ist $h_f{}^*$ die Sättigungsenthalpie der Flüssigkeit und $h_g{}^*$ die Enthalpie des (in diesem Zustand überhitzten) Dampfes. Der "Interfacial Heat- and Mass- Transfer" ist somit durch zwei wählbare Koeffizienten $H_{if}$ und $H_{ig}$ simulierbar. Diese hängen vom thermohydraulischen Zustand im betrachteten Teilvolumen ab.

Der Beitrag des Wärmeaustauschs mit einer möglicherweise vorhandenen Wand kann für ein Teilvolumen anhand dreier Bestandteile simuliert werden. Dabei werden die Aufteilung des Wärmestroms von der Umgebung auf die jeweiligen Phasen, die Bei dem in der Druckschrift von Y.Q. Ruan und H. Austregeliso "An Integral Modeling Technique for High-Speed and Detailed Simulation of LWR Thermo-Hydralic Processes", Proc. Int. Topical Meeting on Nuclear Thermal Hydraulics, 1993, Grenoble, France, Seiten 599-607, offenbaren Simulationsverfahren werden jeweils eine Anzahl dieser Teilvolumina zu sogenannten "Malvo-Volumina" zusammengefaßt, um so eine Simulation mit einer vergleichsweise geringen Anzahl von Differentialgleichungen niedriger Ordnung zu ermöglichen. Festlegung eines Massenstroms zwischen den Phasen und die Zuordnung eines Enthalpiestroms zu diesem Massenstrom in den Energiegleichungen berücksichtigt.

Für die Durchführung eines derartigen Simulationsverfahrens ist die Quantifizierung der Koeffizienten $H_{if}$ und $H_{ig}$ erforderlich. Die Koeffizienten unterliegen dabei jedoch physikalischen Randbedingungen. So muß bei der Simulation eines Falles, bei dem die Temperatur der flüssigen Phase $T_f$ über der Sättigungstemperatur $T_{sat}$ liegt, oder für den Fall eines sehr hohen Dampfgehaltes der Koeffizient $H_{if}$ auf einen sehr hohen Wert gesetzt werden. Bei einem sehr niedrigen Dampfgehalt oder in dem Fall, daß die Temperatur der gasförmigen Phase $T_g$ unter der Sättigungstemperatur $T_{sat}$ liegt, muß dagegen der Koeffizient $H_{ig}$ auf einen sehr hohen Wert gesetzt werden. Dabei kann der Wertebereich für die Koeffizienten $H_{if}$ und $H_{ig}$ um etwa sechs Zehnerpotenzen variieren. Dies kann bei der Ausführung der Simulationsberechnungen zu numerischen Instabilitäten führen. Diese können bei dem Simulationsverfahren zu einem Versagen der Simulation führen, so daß ein solches Simulationsverfahren nur bedingt zuverlässig wäre.

Der Erfindung liegt daher die Aufgabe zugrunde, ein besonders zuverlässiges und flexibles Verfahren sowie ein System zur Simulation des Verhaltens einer technischen Anlage anzugeben. Das Verfahren soll dabei in allen Wertebereichen physikalisch korrekt und mathematisch stabil sein.

Diese Aufgabe wird bei einem Simulationsverfahren für eine technische Anlage der obengenannten Art erfindungsgemäß gelöst, indem ein Wärmestrom und ein Massenstrom zwischen zwei Phasen jeweils anhand einer Linearkombination von Differenzen aus Ableitungen der Entropie der jeweiligen Phase nach extensiven thermodynamischen Größen wie der inneren Energie bzw. der Masse der jeweiligen Phase ermittelt werden, wobei die Linearkoeffizienten eines aus den Linearkombinationen gebildeten Gleichungssystems eine symmetrische Matrix bilden.

Die Erfindung geht dabei von der Überlegung aus, daß eine besonders zuverlässige und numerisch stabile Simulation des Anlagenverhaltens abweichend vom Ansatz nach den Gleichungen 1), 2) auf physikalische Prinzipien gegründet sein sollte. Da sich das zu simulierende System im thermischen Nichtgleichgewicht befindet, eignen sich dazu besonders die Gesetzmäßigkeiten der irreversiblen Thermodynamik. Die irreversible Thermodynamik beschreibt die Annäherung eines Systems an einen thermischen Gleichgewichtszustand mit Hilfe von Strömen, die jeweils als eine Linearkombination von Kräften darstellbar sind. Die die Massen- und Wärmeströme erzeugenden Kräfte ihrerseits sind als Differenz der Ableitungen der Entropien zweier Phasen nach der inneren Energie oder als Differenz der Ableitungen der Entropien zweier Phasen nach der Masse darstellbar. Die Linearkoeffizienten der Linearkombinationen sollten zudem die Onsager-Relationen erfüllen, so daß eine wesentliche Gesetzmäßigkeit der irreversiblen Thermodynamik bei dem Simulationsverfahren zur Anwendung kommt.

Für eine Simulation des Anlagenverhaltens, die auch bei einem Teilbereich mit hoher Komplexität zuverlässig ist, wird der Teilbereich vorteilhafterweise in eine Anzahl von Teilvolumina unterteilt, wobei für jedes Teilvolumen der Wärmestrom und der Massenstrom nach den beschriebenen Verfahren bestimmt werden.

Zudem ist die aus den Linearkoeffizienten gebildete Matrix vorteilhafterweise positiv definit. Somit ist auf besonders einfache Weise erreicht, daß die Entropie der simulierten technischen Anlage als Funktion der Zeit anwächst.

Um einen Wärmeaustausch mit einer Wand des Teilbereichs bei der Simulation zuverlässig zu berücksichtigen, wird vorteilhafterweise für jede Phase anhand einer weiteren Linearkombination ein Wärmestrom zwischen dieser Phase und der Wand als Umgebung ermittelt, wobei jede Linearkombination jeweils eine Differenz aus Ableitungen der Entropie der jeweiligen Phase und der Entropie der Umgebung nach der inneren Energie als Linearkoeffizienten enthält.

Vorteilhafterweise werden die Differenzen der Ableitungen der Entropien zweier Phasen oder der Umgebung nach der inneren Energie durch eine Differenz aus den Temperaturen der jeweiligen Phasen bzw. der Wand angenähert. Der genannte Teilbereich der technischen Anlage ist zweckmäßigerweise der Primärkreislauf oder der Sekundärkreislauf eines Kernkraftwerks.

Die mit der Erfindung erzielten Vorteile bestehen insbesondere darin, daß das Simulationsverfahren aufgrund der Einbeziehung der irrevsiblen Thermodynamik besonders zuverlässig ist. Die Koeffizienten der Linearkombinationen weisen einen besonders geringen Wertebereich auf. Somit ist gewährleistet, daß auch physikalische Extremsituationen, wie beispielsweise eine überhitzte Flüssigkeit oder unterkühlter Dampf, zuverlässig beschrieben sind. Das Simulationsverfahren ist somit numerisch besonders stabil. Insbesondere sind die Wechselbeziehungen zwischen den Massen- und Wärmeströmen physikalisch korrekt berücksichtigt. Als Anwendung der irreversiblen Thermodynamik auf das Simulationsverfahren ergeben sich dabei zum einen für die Massen- und Wärmeströme Darstellungen als Funktion von "Kräften" und zum anderen Beziehungen zwischen den Strömen auf Grund der Onsager-Relation.

Ein Ausführungsbeispiel der Erfindung wird anhand einer Zeichnung näher erläutert. Darin zeigen:

Figur 1       schematisch ein Simulationssystem,

Figur 2       schematisch den Primärkreis eines Druckwasserreaktors, und

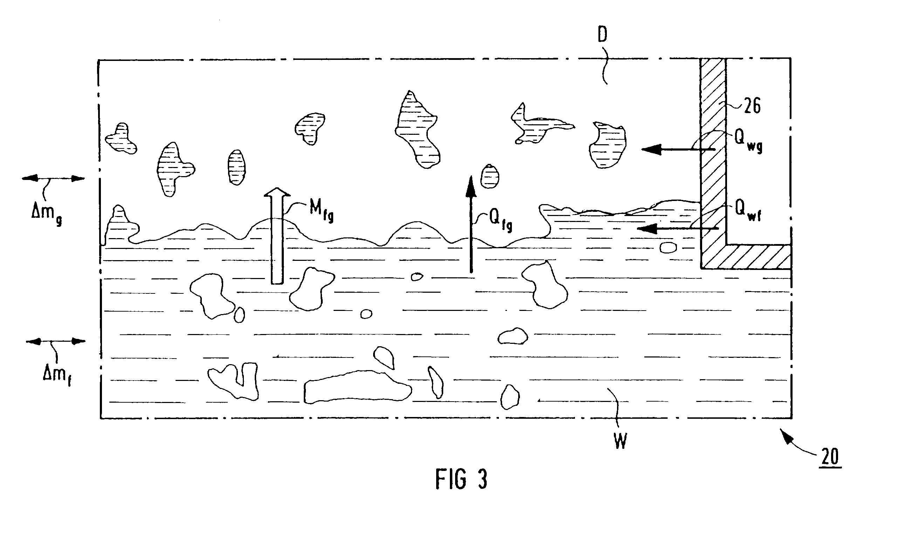

Figur 3       im Ausschnitt ein Teilvolumen aus dem Primärkreis.

Gleiche Teile sind in allen Figuren mit den gleichen Bezugszeichen versehen.

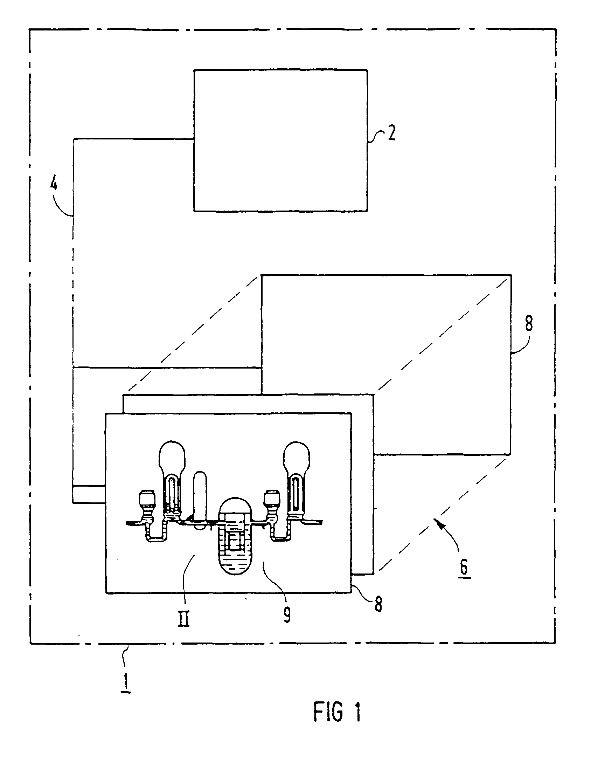

Das Simulationssystem 1 gemäß Figur 1 umfaßt eine Rechnereinheit 2. In die Rechnereinheit 2 sind über eine Datenleitung 4 eine Anzahl von in einer Datenbank 6 hinterlegten Schaltungs- oder Konstruktionsplänen 8 einlesbar.

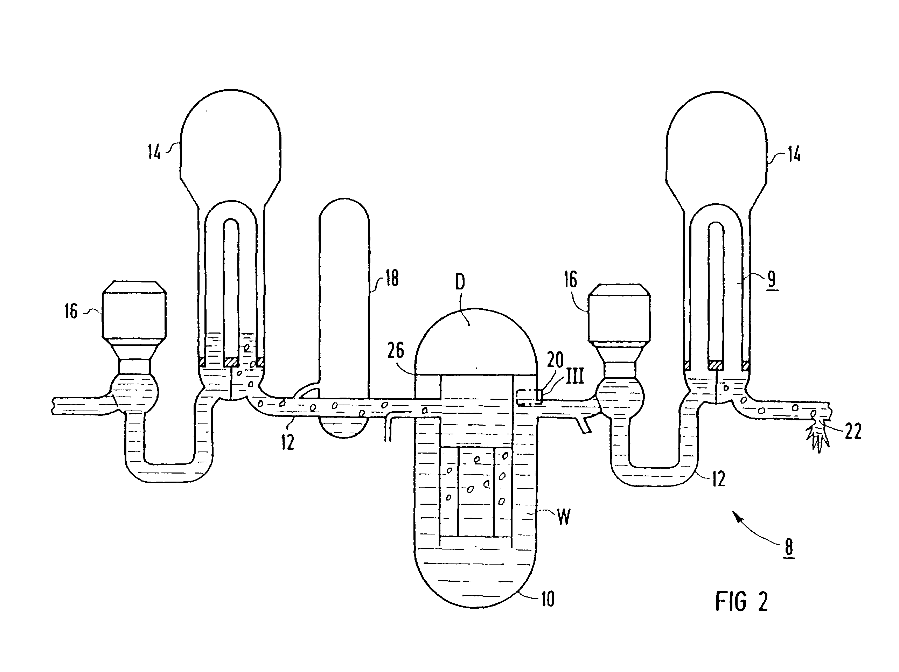

Anhand jedes der Schaltungs- oder Konstruktionspläne 8 ist ein Teilbereich einer technischen Anlage vollständig beschreibbar. Der in Figur 2 gezeigte Schaltungs- und Konstruktionsplan 8 beschreibt beispielsweise den Primärkreis 9 eines Druckwasserreaktors vollständig. Dabei sind an einen Reaktordruckbehälter 10 des Druckwasserreaktors über ein Kühlmittelsystem 12 zwei Dampferzeuger 14 angeschlossen. In das Kühlmittelsystem 12 sind zudem zwei Kühlmittelpumpen 16 sowie ein Druckhaltedom 18 geschaltet.

Für ein Planungs- oder Genehmigungsverfahren eines solchen Druckwasserreaktors ist eine genaue Kenntnis über dessen Anlagenverhalten, insbesondere in fiktiven Störfall- oder Unfallsituationen, erforderlich. Dazu wird das Anlagenverhalten auf dem Simulationssystem 1 simuliert, indem für einen vorgebbaren Teilbereich anhand des diesen beschreibenden Schaltungs- oder Konstruktionsplanes 8 dessen Verhalten bei einer vorgebbaren Situation berechnet wird.

Für eine derartige Berechnung wird zunächst ein zu simulierender Teilbereich ausgewählt, dessen Schaltungs- oder Konstruktionsplan 8 aus der Datenbank 6 in das Rechnersystem 2 eingelesen wird.

Im Ausführungsbeispiel ist - wie in Figur 2 angedeutet - der zu simulierende fiktive Störfall ein hypothetischer Kühlmittelverluststörfall, der sich in Folge eines am Kühlmittelsystem 12 auftretenden Lecks 22 entwickelt. Der zu simulierende Teilbereich des Druckwasserreaktors ist somit dessen Primärkreis 9, in dem als Medium ein Wasser-Dampf-Gemisch W, D geführt ist, das in flüssiger Phase als Wasser W und in gasförmiger Phase als Dampf D vorliegt.

Bei dem zu simulierenden Kühlmittelverluststörfall tritt durch das Leck 22 Kühlmittel aus dem Primärkreis 9 aus. Daraus resultiert ein Druckabfall, der wiederum eine Verdampfung in allen Bereichen des Primärkreises 9 bewirkt. Aufgrund der nuklearen Nachwärme des Reaktorkerns wird die Verdampfung noch verstärkt. Im weiteren Verlauf des simulierten Störfalls wird unterkühltes Wasser W in den Primärkreis 9 eingespeist, wodurch Kondensation erfolgt.

Für eine Simulation seines Verhaltens wird der im Ausführungsbeispiel als Teilbereich ausgewählte Primärkreis 9 des Druckwasserreaktors zunächst aufgeteilt in eine Anzahl von Teilvolumina 20, von denen in Figur 4 eines gezeigt ist. Anschließend werden die Anfangs- und Randbedingungen für den zu simulierenden fiktiven Störfall, also im Ausführungsbeispiel die Kenngrößen für das Leck 22, vorgegeben.

Bei der Simulation wird dann für jedes Teilvolumen 20 das Verhalten des in ihm befindlichen Wassers W und des in ihm befindlichen Dampfes D ermittelt. Dabei wird zunächst - wie in Figur 4 durch die Pfeile $\Delta m_g$, $\Delta m_f$ angedeutet - der direkte Massenaustausch der beiden Phasen W, D mit den jeweils benachbarten Teilvolumina 20 berücksichtigt, mit denen das betrachtete Teilvolumen 20 im konvektiven Massenaustausch steht.

Ein Massen- und ein Wärmeaustausch zwischen den beiden Phasen W, D sowie ein Wärmeaustausch zwischen jeder Phase W, D und einer Umgebung des Teilvolumens 20 werden auf der Grundlage der irreversiblen Thermodynamik ermittelt. Die Umgebung des Teilvolumens 20 wird dabei durch dessen Wand 26 repräsentiert. Somit werden bei der Simulation des Verhaltens der Phasen W, D im Teilvolumen 20 zusätzlich zu den Wärme- und Massenaustauschtermen $\Delta m_g$, $\Delta m_f$ mit dessen Nachbarteilvolumina 20 folgende Beiträge berücksichtigt: der Wärmestrom $Q_{wf}$ von der Wand 26 in das Wasser W, der Wärmestrom $Q_{wg}$ von der Wand 26 in den Dampf D, der Wärmestrom $Q_{gf}$ vom Wasser W in den Dampf D und der Massenstrom $M_{gf}$ vom Wasser W in den Dampf D. Negative Wärme- oder Massenströme bedeuten dabei, daß Wärme bzw. Masse in die entgegengesetzte Richtung transportiert wird.

Die Wärme - oder Massenströme $Q_{wf}$, $Q_{wg}$, $Q_{gf}$, $M_{gf}$ werden jeweils anhand einer Linearkombination von Differenzen aus Ableitungen der Entropie $S_f$, $S_g$, $S_w$ der jeweiligen Phase W, D oder der Wand 26 nach thermischen Zustandsgrößen dargestellt. Thermische Zustandsgrößen sind dabei bei gleichem Druck in beiden Phasen die innere Energie U und auch die Masse $m_f$, $m_g$ einer Phase W,D.

Nach den Gesetzen der Thermodynamik ergibt die Ableitung der Entropie nach der inneren Energie U die reziproke Temperatur. Somit ergibt sich für eine Differenz aus Ableitungen der Entropien $S_f$, $S_g$ der jeweiligen Phasen W, D nach deren inneren Energien $U_f$ bzw. $U_g$:

$$\frac{\partial S_f}{\partial U} - \frac{\partial S_g}{\partial U} = \frac{1}{T_f} - \frac{1}{T_g} \qquad\qquad 3)$$

Dabei ist $T_f$ die Temperatur der flüssigen Phase W und $T_g$ die Temperatur der gasförmigen Phase D.

Weiterhin ist nach den Gesetzen der Thermodynamik die Ableitung der Entropie $S_f$, $S_g$ einer Phase W, D nach der Masse $m_f$ bzw. $m_g$ gegeben durch deren chemisches Potential:

$$\frac{\partial S_t}{\partial m} - \frac{\partial S_g}{\partial m} = - \left( \frac{\mu_t}{T_f} - \frac{\mu_g}{T_g} \right) \qquad\qquad 4)$$

Zur Ermittlung der Wärme- und Massenströme $M_{gf}$, $Q_{gf}$, $Q_{wf}$, $Q_{wg}$ werden Linearkombinationen aus den jeweiligen Ableitungen gebildet gemäß:

$$M_{gf} = -L_{11}\left(\frac{\mu_f}{T_f} - \frac{\mu_g}{T_g}\right) + L_{12}\left(\frac{1}{T_f} - \frac{1}{T_g}\right) + L_{13}\left(\frac{1}{T_f} - \frac{1}{T_w}\right) + L_{14}\left(\frac{1}{T_g} - \frac{1}{T_w}\right)$$

$$Q_{gf} = -L_{12}\left(\frac{\mu_f}{T_f} - \frac{\mu_g}{T_g}\right) + L_{22}\left(\frac{1}{T_f} - \frac{1}{T_g}\right) + L_{23}\left(\frac{1}{T_f} - \frac{1}{T_w}\right) + L_{24}\left(\frac{1}{T_g} - \frac{1}{T_w}\right)$$

$$5)$$

$$Q_{wf} = -L_{13}\left(\frac{\mu_f}{T_f} - \frac{\mu_g}{T_g}\right) + L_{23}\left(\frac{1}{T_f} - \frac{1}{T_g}\right) + L_{33}\left(\frac{1}{T_f} - \frac{1}{T_w}\right) + L_{34}\left(\frac{1}{T_g} - \frac{1}{T_w}\right)$$

$$Q_{wg} = -L_{14}\left(\frac{\mu_f}{T_f} - \frac{\mu_g}{T_g}\right) + L_{24}\left(\frac{1}{T_f} - \frac{1}{T_g}\right) + L_{34}\left(\frac{1}{T_f} - \frac{1}{T_w}\right) + L_{44}\left(\frac{1}{T_g} - \frac{1}{T_w}\right)$$

Die aus den Linearkoeffizienten $L_{ij}$ dieses Gleichungssystems 5) gebildete Matrix ist symmetrisch. Dadurch ist den Onsager-Relationen (Onsagersche Reziprozitätsbeziehung, Onsagersche Symmetriebeziehung) Rechnung getragen. Zudem sind die Linearkoeffizienten $L_{ij}$ derart gewählt, daß die Matrix positiv definit ist. Somit ist die durch das Gleichungssystem 5) beschriebene Entropieänderung des Teilvolumens 20 immer positiv.

Für eine besonders einfache Verarbeitung kann die Differenz der Ableitungen der Entropien $S_f$, $S_g$ angenähert werden durch:

$$\frac{1}{T_f} - \frac{1}{T_g} = \frac{1}{T_{sat}^2}(T_g - T_f) \qquad\qquad 6)$$

Dabei wurde nach einer Erweiterung der reziproken Temperaturen der gemeinsame Nenner angenähert durch die Annahme, daß sowohl die Temperatur $T_f$ des Wassers W als auch die Temperatur $T_g$ des Dampfes D etwa einer Sättigungstemperatur $T_{sat}$ gleich sind.

Bei Druckgleichheit in beiden Phasen W, D und unter der gleichen Annahme wie oben kann weiterhin die Differenz der Ableitungen der Entropien nach den Massen angenähert werden durch:

$$-\left(\frac{\mu_f}{T_f} - \frac{\mu_f}{T_g}\right) = -\frac{h_{f,sat}}{T_{sat}^2}(T_{sat} - T_f) + \frac{h_{g,sat}}{T_{sat}^2}(T_{sat} - T_g) \qquad 7)$$

$h_{f,sat}$ und $h_{g,sat}$ sind dabei die Sättigungsenthalpien der jeweiligen Phasen W bzw. D.

Anhand des Gleichungssystems 5) werden die Wärme- und Massenströme $M_{gf}$, $Q_{gf}$, $Q_{wf}$, $Q_{wg}$ ermittelt und in den Bilanzgleichungen für das Teilvolumen 20 berücksichtigt. Auf dieser Grundlage werden die Bilanzgleichungen für jedes Teilvolumen 20 und für jeden Zeitschritt gelöst.

Aufgrund der Einbeziehung der irreversiblen Thermodynamik ist dieses Simulationsverfahren mathematisch besonders stabil und somit besonders zuverlässig.

**Patentansprüche**

1. Verfahren zur Simulation des Verhaltens einer technischen Anlage, in der in einem Teilbereich ein in einer Anzahl von Phasen (W, D) vorliegendes Medium umläuft, bei dem ein Wärmestrom ($Q_{fg}$) und ein Massenstrom ($M_{fg}$) zwischen zwei Phasen (W, D) jeweils anhand einer Linearkombination von Differenzen aus Ableitungen der Entropie ($S_f$, $S_g$) der jeweiligen Phase (W, D) nach der inneren Energie (U) bzw. nach der Masse ($m_f$, $m_g$) der jeweiligen Phase (W, D) ermittelt werden, wobei die Linearkoeffizienten ($L_{ij}$) eines aus den Linearkombinationen gebildeten Gleichungssystems eine symmetrische Matrix bilden.

2. Verfahren nach Anspruch 1, bei dem der Teilbereich in eine Anzahl von Teilvolumina (20) unterteilt wird, wobei für jedes Teilvolumen (20) der Wärmestrom ($Q_{fg}$) und der Massenstrom ($M_{fg}$) zwischen zwei Phasen (W, D) separat ermittelt werden.

3. Verfahren nach Anspruch 1 oder 2, bei dem die aus den Linearkoeffizienten ($L_{ij}$) gebildete Matrix positiv definit ist.

4. Verfahren nach einem der Ansprüche 1 bis 3, bei dem für jede Phase (W, D) anhand einer weiteren Linearkombination jeweils ein Wärmestrom ($Q_{wf}$, $Q_{wg}$) zwischen dieser Phase (W, D) und einer Wand (26) als Umgebung ermittelt wird, wobei die Linearkombination jeweils eine Differenz aus Ableitungen der Entropie ($S_f$, $S_g$) der jeweiligen Phase (W, D) und der Entropie ($S_w$) der Umgebung nach der inneren Energie (U) umfaßt.

5. Verfahren nach einem der Ansprüche 1 bis 4, bei dem die Differenzen der Ableitungen der Entropie ($S_f$, $S_g$) zweier Phasen (W, D) oder der Umgebung nach der inneren Energie (U) durch eine Differenz der Temperaturen ($T_f$, $T_g$, $T_w$) der jeweiligen Phasen (W, D) bzw. der Wand (26) angenähert werden.

6. Verfahren nach einem der Ansprüche 1 bis 5, bei dem der Teilbereich der technischen Anlage der Primärkreis (9) eines Kernkraftwerkes ist.

7. Verfahren nach einem der Ansprüche 1 bis 5, bei dem der Teilbereich der technischen Anlage der Sekundärkreislauf eines Kernkraftwerkes ist.

8. Simulationssystem (1) zur Durchführung des Verfahrens nach einem der Ansprüche 1 bis 7, bei dem in eine Rechnereinheit (2) eine Anzahl von in einer Datenbank (6) hinterlegten Schaltungs- oder Konstruktionsplänen (8) einlesbar sind, die anhand der Schaltungs- oder Konstruktionspläne (8) einen Wärmestrom ($Q_{fg}$) und einen Massenstrom ($M_{fg}$) zwischen zwei Phasen (W,D) eines in einer Anzahl von Phasen (W,D) vorliegenden Mediums jeweils anhand einer Linearkombination von Differenzen aus Ableitungen der Entropie ($S_f$,$S_g$) der jeweiligen Phase (W, D) nach der inneren Energie (U) bzw. nach der Masse ($m_f$,$m_g$) der jeweiligen Phase (W,D) ermittelt, wobei die Linearkoeffizienten ($L_{ij}$) eines aus den Linearkombinationen gebildeten Gleichungssystems eine symmetrische Matrix bilden.

## Claims

1. Method for simulating the behaviour of a technical installation, in which, in a partial region, a medium present in a number of phases (W, D) circulates, in which method a heat flaw ($Q_{fg}$) and a mass flow ($M_{fg}$) between two phases (W, D) are determined in each case with the aid of a linear combination of differences between derivatives of the entropy ($S_f$, $S_g$) of the respective phase (W, D) according to the internal energy (U) and according to the mass ($m_f$, $m_g$), respectively, of the respective phase (W, D), with the linear coefficients ($L_{ij}$) of a system of equations formed from the linear combinations forming a symmetrical matrix.

2. Method according to claim 1, in which the partial region is subdivided into a number of partial volumes (20), with the heat flow ($Q_{fg}$) and the mass flow ($M_{fg}$) between two phases (W, D) being determined separately for each partial volume (20).

3. Method according to claim 1 or 2, in which the matrix formed from the linear coefficients ($L_{ij}$) is positively defined.

4. Method according to one of claims 1 to 3, in which there is determined for each phase (W, D) with the aid of a further linear combination in each case a heat flow ($Q_{wf}$, $Q_{wg}$) between this phase (W, D) and a wall (26) as surroundings, with the linear combination containing in each case a difference between derivatives of the entropy ($S_f$, $S_g$) of the respective phase (W, D) and the entropy ($S_w$) of the surroundings according to the internal energy (U).

5. Method according to one of claims 1 to 4, in which the differences of the derivatives of the entropy ($S_f$, $S_g$) of two phases (W, D) or the surroundings according to the internal energy (U) are approximated by a difference of the temperatures ($T_f$, $T_g$, $T_w$) of the respective phases (W, D) and of the wall (26).

**6.** Method according to one of claims 1 to 5, in which the partial region of the technical installation is the primary loop (9) of a nuclear power station.

**7.** Method according to one of claims 1 to 5, in which the partial region of the technical installation is the secondary loop of a nuclear power station.

**8.** Simulation system (1) for carrying out the method according to one of claims 1 to 7, in which there can be read into an arithmetic unit (2) a number of circuit or construction diagrams (8) stored in a database (6), which arithmetic unit determines with the aid of the circuit or construction diagrams (8) a heat flow ($Q_{fg}$) and a mass flow ($M_{fg}$) between two phases (W, D) of a medium present in a number of phases (W, D), in each case with the aid of a linear combination of differences between derivatives of the entropy ($S_f$, $S_g$) of the respective phase (W, D) according to the internal energy (U) and according to the mass ($m_f$, $m_g$), respectively, of the respective phase (W, D), with the linear coefficients ($L_{ij}$) of a system of equations formed from the linear combinations forming a symmetrical matrix.


## Revendications

**1.** Procédé de simulation du comportement d'une installation technique, dans laquelle un fluide présent en un nombre de phases (W, D) passe dans une zone partielle, selon lequel un flux thermique ($Q_{fg}$) et un flux massique ($M_{fg}$) entre deux phases (W, D) sont déterminés en fonction de l'énergie interne (U) ou en fonction de la masse ($m_f$, $m_g$) de la phase (W, D) respective à l'aide d'une combinaison linéaire de différences issues de dérivées de l'entropie ($S_f$, $S_g$) de la phase (W, D) respective, les coefficients linéaires ($L_{ij}$) d'un système d'équations issu des combinaisons linéaires formant une matrice symétrique.

**2.** Procédé suivant la revendication 1, selon lequel la zone partielle est subdivisée en un nombre de volumes partiels (20), le flux thermique ($Q_{fg}$) et le flux massique ($M_{fg}$) entre deux phases (W, D) étant déterminés séparément pour chaque volume partiel (20).

**3.** Procédé suivant la revendication 1 ou 2, selon lequel la matrice issue des coefficients linéaires ($L_{ij}$) est définie de façon positive.

**4.** Procédé suivant l'une des revendications 1 à 3, selon lequel il est, à l'aide d'une autre combinaison linéaire, déterminé pour chaque phase (W, D) un flux thermique ($Q_{wf}$, $Q_{wg}$) entre cette phase (W, D) et une paroi (26) en tant qu'environnement, chaque combinaison linéaire comportant une différence issue de dérivées de l'entropie ($S_f$, $S_g$) de la phase (W, D) respective et de l'entropie ($S_w$) de l'environnement en fonction de l'énergie interne (U).

**5.** Procédé suivant l'une des revendications 1 à 4, selon lequel les différences des dérivées de l'entropie ($S_f$, $S_g$) de deux phases (W, D) ou de l'environnement en fonction de l'énergie interne (U) font l'objet d'une approximation par une différence des températures ($T_f$, $T_g$, $T_w$) des phases (W, D) respectives ou de la paroi (26).

**6.** Procédé suivant l'une des revendications 1 à 5, selon lequel la zone partielle de l'installation technique est le circuit primaire (9) d'une centrale nucléaire.

**7.** Procédé suivant l'une des revendications 1 à 5, selon lequel la zone partielle de l'installation technique est le circuit secondaire d'une centrale nucléaire.

**8.** Système de simulation (1) pour la mise en oeuvre du procédé selon l'une quelconque des revendications 1 à 7, dans lequel un nombre de schémas de montage ou de construction (8) enregistrés dans une banque de données (6) peut être lu dans une unité de calcul (2) qui, à l'aide des schémas de montage ou de construction (8), détermine un flux thermique ($Q_{fg}$) et un flux massique ($M_{fg}$) entre deux phases (W, D) d'un fluide présent en un nombre de phases (W, D), au moyen d'une combinaison linéaire de différences issues de dérivées de l'entropie ($S_f$, $S_g$) de la phase (W, D) respective en fonction de l'énergie interne (U) ou en fonction de la masse ($m_f$, $m_g$) de la phase (W, D) respective, les coefficients linéaires ($L_{ij}$) d'un système d'équations issu des combinaisons linéaires formant une matrice symétrique.

FIG 1

FIG 2

FIG 3